# EUROPEAN PATENT APPLICATION

(11) **EP 4 596 314 A1**
(43) Date of publication of application: **06.08.2025**
(21) Application number: 25156047.0
(22) Date of filing: 05.02.2025
(51) Int. Cl.: B60N 2/28, B60N 2/60

(54) **CUSHIONING STRUCTURE, CUSHIONING ASSEMBLY AND CHILD CARRIER SYSTEM**

(30) Priority: 05.02.2024 CN 202410166931; 17.06.2024 CN 202410780910
(71) Applicant: Wonderland Switzerland AG, 6312 Steinhausen (CH)
(72) Inventor: Li, Ruyi, Guangdong, 523648 (CN); Wu, Hui, Guangdong, 523648 (CN); Chen, Xin, Guangdong, 523648 (CN)
(74) Representative: ERNICKE Patent- und Rechtsanwälte PartmbB

(57) **Abstract**

The present disclosure discloses a cushioning structure (100), a cushion assembly and a child carrier system having the cushioning structure (100). The cushioning structure (100) includes a connecting unit (110) configured to connect to the headrest part (240) of the child carrier (200), a backrest unit (120) connected to the connecting unit (110), and a seat unit (130) connected to the backrest unit (120), wherein the connecting unit (110) drives the backrest unit (120) and the seat unit (130) to move along with movement of the headrest part (240). The cushioning structure (100), the cushion assembly and the child carrier system can be adapted to children at different ages or heights and easy for adjustment.

## Description

### TECHNICAL FIELD

The present disclosure relates to the field of children's products, particularly to a cushioning structure, a cushioning assembly, and a child carrier system.

### BACKGROUND

A child carrier (e.g., a child safety seat, etc.) is a device specifically designed for a child. The child carrier is typically used in conjunction with a cushioning structure to provide further support for the child's body, thereby enhancing the safety and comfort of the child riding. The child carrier is generally designed to be adjustable to fit children at different ages or heights. Therefore, it is necessary to design the position of the cushioning structure to be adjustable, in order to fit children at different ages or heights.

### SUMMARY

In view of the above, an object of the present disclosure is to provide a cushioning structure, a cushioning assembly, and a child carrier system including the cushioning structure.

According to a first technical solution of the present disclosure, it is provided with a cushioning structure, suitable for a child carrier, including: a connecting unit configured to connect to the headrest part of the child carrier; a backrest unit connected to the connecting unit; and a seat unit connected to the backrest unit; wherein the connecting unit drives the backrest unit and the seat unit to move along with movement of the headrest part.

In one of the embodiments, the connecting unit includes: a headrest cushion connected to the backrest unit and configured to support a child's head; and a connecting part connected to a back side of the headrest cushion and configured to connect to the headrest part.

In one of the embodiments, a part of the connecting part is spaced apart from the back side of the headrest cushion to form a pocket-like portion, and the connecting unit is configured to sleeve the headrest part to accommodate the headrest part within the pocket-like portion.

In one of the embodiments, the connecting part has an opening for exposing a position operating member on the headrest part.

In one of the embodiments, the seat unit has a crotch belt perforation in a strip-like shape extending along the longitudinal direction of the seat unit.

In one of the embodiments, the seat unit includes: a seat cushion; a dividing part connected to the seat cushion and at least dividing the seat cushion into a first seating area and a second seating area, the first seating area being connected between the backrest unit and the second seating area, the seat cushion being foldable at the dividing part.

In one of the embodiments, in a longitudinal direction of the cushioning structure, an extension length of the first seating area is shorter than an extension length of the second seating area.

In one of the embodiments, the seat unit has a crotch belt perforation in a strip-like shape extending from the second seating area to the first seating area.

In one of the embodiments, in the longitudinal direction of the cushioning structure, an extension length of the crotch belt perforation in the first seating area is shorter than an extension length of the crotch belt perforation in the second seating area.

In one of the embodiments, a first waist belt channel is provided on an end of the first seating area away from the second seating area, a guide channel is provided on the seat cushion, the guide channel extends inward from a side edge of the seat cushion and communicates with the first waist belt channel.

In one of the embodiments, the seat cushion is further provided with a second waist belt channel that is positioned outside the first waist belt channel in a transverse direction of the seat cushion.

In one of the embodiments, a part of the second waist belt channel extends in a longitudinal direction of the seat cushion towards a free end of the seat cushion beyond the first waist belt channel.

In one of the embodiments, the cushioning structure includes two sets of waist belt cooperation parts spaced apart in the transverse direction of the cushioning structure, each set of the waist belt cooperation parts has at least two waist belt channels arranged in the transverse direction, so that the cushioning structure is configured to match at least two width modes of the waist belt of the child carrier.

In one of the embodiments, the seat unit includes a seat cushion and two first side guards respectively connected to both sides of the seat cushion. Each of the first side guards includes a first part connected to the seat cushion, and a second part connected to the first part in the longitudinal direction of the seat cushion. The second part is positioned closer to the backrest unit relative to the first part. The second part is spaced apart from the seat cushion.

In one of the embodiments, the seat unit includes a seat cushion and two first side guards respectively connected to both sides of the seat cushion. Each of the first side guards has a first end and a second end arranged opposite to each other. The second end of the first side guard is positioned closer to the backrest unit relative to the first end of the first side guard. The second end of the first side guard is provided with a first inclined edge. The first inclined edge extends obliquely from one side edge of the first side guard away from the side edge of the seat cushion, to allow the second end of the first side guard to make way for the side edge of the seat cushion.

In one of the embodiments, the backrest unit includes a backrest cushion and two second side guards respectively connected to both sides of the backrest cushion. The second end of the first side guard is provided with a second inclined edge. The second inclined edge extends obliquely from the other side edge of the first side guard away from the first end of the first side guard, to allow the second end of the first side guard to make way for the second side guard.

In one of the embodiments, the second side guard, on a side thereof closer to the first side guard, has a first edge that extends outwardly and obliquely away from the seat unit.

In one of the embodiments, the connecting unit is further configured to support a child's head, and the cushioning structure has two shoulder belt channels between the connecting unit and the backrest unit.

In one of the embodiments, the cushioning structure further includes a connecting body configured to connect to a structure movable with the headrest part and below the headrest part in the child carrier; wherein the connecting body is connected to the connecting unit and positioned on the back side of the connecting unit, or the connecting body is connected to the backrest unit and positioned on the back side of the backrest unit.

According to a second technical solution of the present disclosure, it is provided with a cushioning assembly suitable for a child carrier, including a cushion body and the cushioning structure according to the first technical solution. The cushioning assembly has a first usage mode and a second usage mode; wherein when the cushioning assembly is in the first usage mode, the cushioning structure is used in combination with the cushion body, and the cushion body is placed on the cushioning structure and configured to allow a child to be seated; when the cushioning assembly is in the second usage mode, the cushion body is removed from the cushioning structure, and the cushioning structure is configured to allow the child to be seated.

In one of the embodiments, the cushion body includes a main body and two fourth side guards connected to both sides of the main body. A penetration part is formed between each of the fourth side guards and a side of the main body corresponding to the fourth side guard. The penetration part is configured such that the waist belt of the child carrier may pass through it.

In one of the embodiments, the seat unit of the cushioning structure includes a seat cushion, and waist belt passages are provided on both sides of the seat cushion.

According to a third technical solution of the present disclosure, it is provided with a child carrier system, including a child carrier and the cushioning structure according to the first technical solution. The cushioning structure is detachably connected to the child carrier, wherein a seat body of the child carrier includes: a seat part; a backrest part connected to the seat part and forming a seating space together with the seat part; and a headrest part connected to the backrest part and capable of sliding relative to the backrest part in a longitudinal direction of the backrest part; wherein the cushioning structure is positioned within the seating space, and the connecting unit of the cushioning structure is connected to the headrest part.

In one of the embodiments, when the headrest part slides relative to the backrest part away from the seat part, a distance between a free edge of the seat unit of the cushioning structure and a free edge of the seat part increases; when the headrest part slides relative to the backrest part close to the seat part, a distance between the free edge of the seat unit of the cushioning structure and the free edge of the seat part decreases.

In one embodiment, the child carrier system includes a head contact surface and a back contact surface. The head contact surface is provided on the headrest part or the connecting unit, and the head contact surface is configured to contact and support the child's head. The back contact surface is provided on the backrest unit of the cushioning structure, and the back contact surface is configured to contact and support the child's back. In a direction perpendicular to the head contact surface, the head contact surface is retracted in a direction close to the seat body relative to the back contact surface.

In one of the embodiments, the child carrier includes a safety belt connected to the seat body, the safety belt passes through the cushioning structure to position the cushioning structure within the seating space.

In one embodiment, the safety belt includes a waist belt, the seat part has two sets of waist belt connecting assembly, each set of waist belt connecting assembly has at least two waist belt connecting parts spaced apart in a transverse direction of the child carrier, the waist belt may connect to any one of the at least two waist belt connecting parts, so that the waist belt has at least two width modes.

In one embodiment, the headrest part includes a headrest support sheet and a buffer connected to the headrest support sheet. The buffer is positioned on a side of the headrest support sheet facing the seating space.

According to the cushioning structure, the cushioning assembly, and the child carrier system of the present disclosure, the cushioning structure may move with the movement of the child carrier's headrest part. When the headrest part is adjusted by a user to match the child as being seated, the cushioning structure may also be adjusted to a position matched with the child as being seated, thereby making the cushioning structure suitable for children at different ages or heights and easy to adjust.

### BRIEF DESCRIPTION OF THE DRAWINGS

The above and other objects, features, and advantages of the present disclosure will become more apparent through detailed description of the preferred embodiments of the present disclosure as shown in the accompanying drawings. The same reference numerals in all the drawings indicate the same components, and the drawings are not necessarily drawn to scale in proportion to the actual size but focus on illustrating main idea of the present disclosure.

Other features, purposes, and advantages of the present disclosure will become more apparent by referring to the detailed description of the nonlimiting embodiments with reference to the following drawings.
Fig. 1 is a schematic view of a child carrier system as provided in a first embodiment of the present disclosure, showing that a cushioning structure is within a seating space of a child carrier, and a safety belt and a cover fitted over the child carrier;
Fig. 2 is a schematic view of a seat body of a child carrier with the safety belt and the cover hidden as provided in the first embodiment of the present disclosure, showing that a headrest part is in a lower position;
Fig. 3 is a schematic view of the seat body of the child carrier with the safety belt and the cover hidden as provided in the first embodiment of the present disclosure, showing that a headrest part is in a higher position;
Fig. 4 is a schematic view of the child carrier as provided in the first embodiment of the present disclosure, showing that the headrest part protrudes out of the cover;
Fig. 5 is a front schematic view of the cushioning structure laid flat as provided in the first embodiment of the present disclosure;
Fig. 6 is a back schematic view of the cushioning structure laid flat as provided in the first embodiment of the present disclosure;
Fig. 7 is a schematic view of the child carrier system with shoulder belts and waist belts hidden as provided in the first embodiment of the present disclosure, showing that a headrest part is in a lower position;
Fig. 8 is a schematic view of the child carrier system with shoulder belts and waist belts hidden as provided in the first embodiment of the present disclosure, showing that the headrest part is in a higher position;
Fig. 9 is a schematic view of a child carrier as provided in a second embodiment of the present disclosure;
Fig. 10 is a front schematic view of a cushioning structure laid flat as provided in the second embodiment of the present disclosure, in which a first side guard and a second side guard are removed;
Fig. 11 is a back schematic view of the cushioning structure laid flat as provided in the second embodiment of the present disclosure, in which the first side guard and the second side guard are removed, and a connecting body is not flipped up;
Fig. 12 is a back schematic view of the cushioning structure laid flat as provided in the second embodiment of the present disclosure, in which the first side guard and the second side guard are removed, and the connecting body is flipped up;
Fig. 13 is a front schematic view of the cushioning structure laid flat as provided in the second embodiment of the present disclosure, in which the first side guard and the second side guard are connected to the cushioning structure;
Fig. 14 is a back exploded schematic view of the cushioning structure laid flat as provided in the second embodiment of the present disclosure, in which the connecting body is flipped up;
Fig. 15 is a schematic view of one usage mode of a child carrier system as provided in a third embodiment of the present disclosure, in which the cushioning assembly is in a first usage mode;
Fig. 16 is a schematic view of another usage mode of the child carrier system provided in the third embodiment of the present disclosure, in which the cushioning assembly is in a second usage mode;
Fig. 17 is a front schematic view of the cushioning structure laid flat as provided in the third embodiment of the present disclosure;
Fig. 18 is a back schematic view of the cushioning structure laid flat as provided in the third embodiment of the present disclosure;
Fig. 19 is a perspective view of a cushion body as provided in the third embodiment of the present disclosure;
Fig. 20 is a top view of the cushion body as provided in the third embodiment of the present disclosure;
Fig. 21 is a bottom view of the cushion body as provided in the third embodiment of the present disclosure;
Fig. 22 is a perspective view showing that the cushion body is cooperated with waist belts, as provided in the third embodiment of the present disclosure;
Fig. 23 is a sectional view taken along a line A-A in Fig. 22.

### DETAILED DESCRIPTION

To facilitate understanding of the present disclosure, the present disclosure will be comprehensively described below with reference to the relevant drawings. The preferred embodiments of the present disclosure are shown in the drawings. However, the present disclosure can be implemented in many different forms and is not limited to the embodiments described herein. Rather, these embodiments are provided to make the present disclosure more thorough and comprehensive.

It should be noted that when an element is considered to be "connected" to another element, it may be directly connected to the other element and integrated therewith, or there may be intermediate elements present. The terms "mounted", "one end", "the other end" and similar expressions used herein are used for illustrative purposes only.

All technical and scientific terms used herein have the same meaning as understood by a person skilled in the art unless otherwise defined. The terms used in the specification of the present disclosure are for the purpose of describing specific embodiments and are not intended to limit the present disclosure. The term "and/or" as used herein includes any and all combinations of one or more of the listed items.

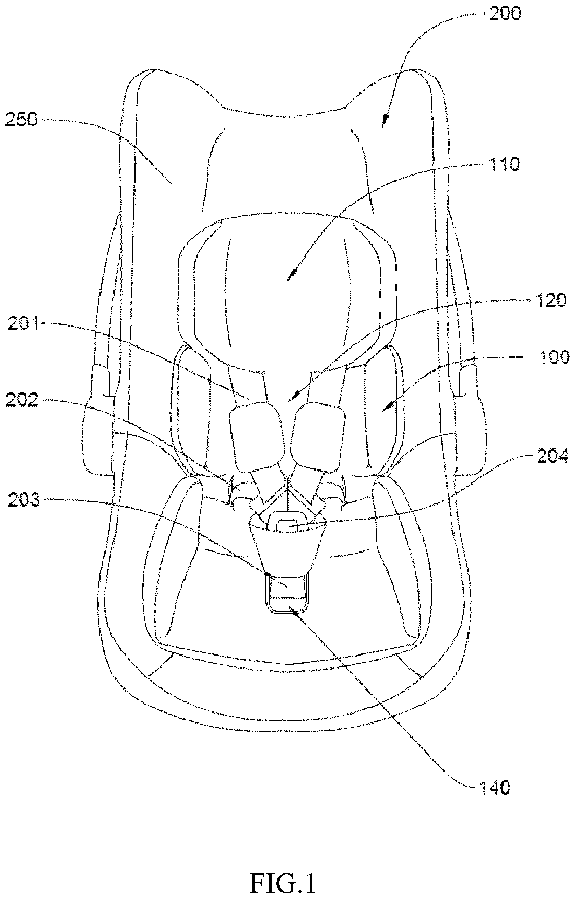

Referring to Fig. 1, which is a schematic view of a child carrier system according to the present disclosure. The child carrier system includes a cushioning structure 100 and a child carrier 200. The cushioning structure 100 is detachably connected to the child carrier 200 and is positioned within a seating space of the child carrier 200. The child carrier 200 is exemplified as a basket-style child safety seat (also referred to as an infant car seat); however, the cushioning structure 100 according to the present disclosure may also be applied to other child carriers 200 that require support for children, such as Harness-style child safety seats, Booster-style child safety seats, child dining chairs, and various types of child strollers.

Referring to Figs. 1 to 4, the child carrier 200 includes a seat body 210, a safety belt connected to the seat body 210, and a cover 250 fitted over the seat body 210. The seat body 210 includes a headrest part 240, a backrest part 230, and a seat part 220. The backrest part 230 and the seat part 220 are connected with each other and form a seating space together. The headrest part 240 is connected to the backrest part 230 and may slide relative to the backrest part 230 in a longitudinal direction of the backrest part 230. The seat body 210 is also provided with a headrest adjustment mechanism (not shown) and a position operating member (not shown) for a user to adjust a position of the headrest part 240. Thereby, by operating the position operating member, the headrest adjustment mechanism releases the headrest part 240, and then the headrest part 240 slides relative to the backrest part 230 to a suitable position. That is, the position of the headrest part 240 is locked while releasing the position operating member, as such, the position of the headrest part 240 is matched with the seated child. That is, the child carrier 200 may be suitable for children at different ages or heights.

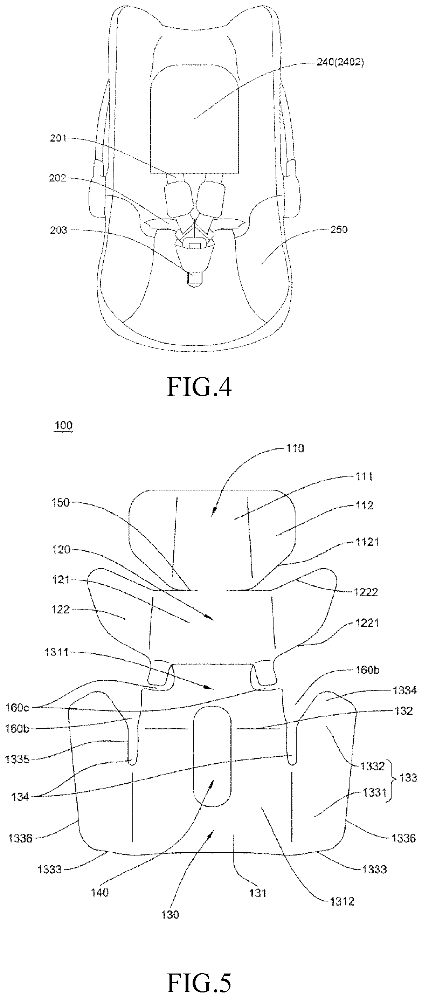

As shown in Figs. 1 and 4, the safety belt of the child carrier 200 may restrain the child, keeping the child seated within the seating space. The safety belt includes two shoulder belts 201, two waist belts 202, and one crotch belt 203. One end of the crotch belt 203 is connected to the seat body 210, and the other end of the crotch belt 203 is connected to a buckle 204. The shoulder belts 201 and waist belts 202 have connecting members that are detachably connected to the buckle 204. Of course, the safety belt may also take other forms, and the present disclosure is not limited thereto. The safety belt passes through the cushioning structure 100 to position the cushioning structure 100 within the seating space of the child carrier 200.

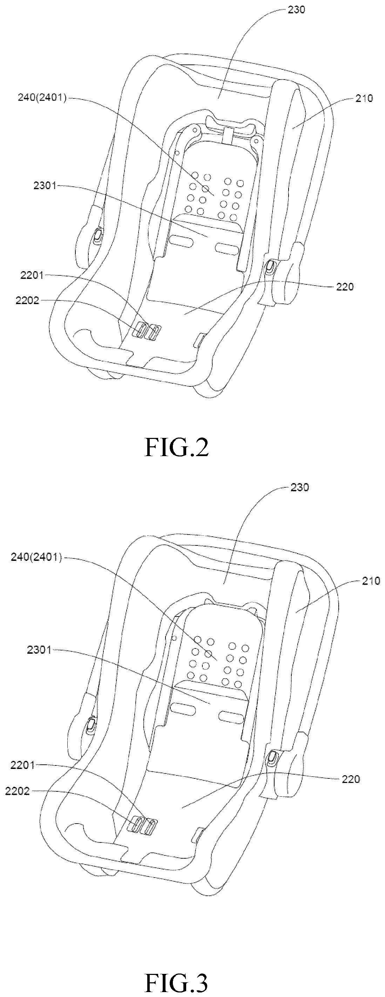

As shown in Figs. 2 to 4, the headrest part 240 may protrude from the cover 250. The headrest part 240 includes a headrest support sheet 2401 and a buffer 2402 connected to the headrest support sheet 2401. The buffer 2402 is positioned on a side of the headrest support sheet 2401 facing the seating space. The headrest support sheet 2401 may be made of plastic or metal materials, and the buffer 2402 may be a foam body, such as EPP foam. The headrest support sheet 2401 may be connected to the backrest part 230 and slide relative to the backrest part 230. The headrest support sheet 2401 and the buffer 2402 may be fixed together by using adhesives, snap-fit structures, etc. The backrest part 230 has a backrest support sheet 2301 that may be made of plastic or metal materials and may provide support for the child's back. The headrest support sheet 2401 is connected to the backrest support sheet 2301. The headrest support sheet 2401 as sliding may drive the backrest support sheet 2301 to move, so that the backrest support sheet 2301 may be adjusted to a position for matching the seated child.

As shown in Figs. 2 and 3, the seat part 220 has two sets of waist belt connecting assemblies. Each set of the waist belt connecting assemblies has two waist belt connecting parts arranged at intervals in a transverse direction of the child carrier 200. A waist belt may be connected to either of the two waist belt connecting parts, to have two width modes. Specifically, the two waist belt connecting parts include a first waist belt connecting part 2201 and a second waist belt connecting part 2202. The second waist belt connecting part 2202 is near the outer side of the seat part 220 in the transverse direction (or the width direction) of the seat part 220 relative to the first waist belt connecting part 2201. The two waist belt connecting parts have hole-like structures. When the two waist belts are connected to the two respective second waist belt connecting parts 2202, a width between the two waist belts 202 is larger, which can accommodate the child with a broader body shape. When the two waist belts 202 are connected to the two respective first waist belt connecting parts 2201, the width between the two waist belts 202 is smaller, which can accommodate the child with a narrower body shape. In other embodiments, each set of the waist belt connecting assemblies may include only one waist belt connecting part, so that the waist belts 202 of the child carrier 200 may be used in only one width mode; alternatively, each set of the waist belt connecting assemblies may include three and more waist belt connecting parts, so that the waist belts 202 may have width modes in more levels.

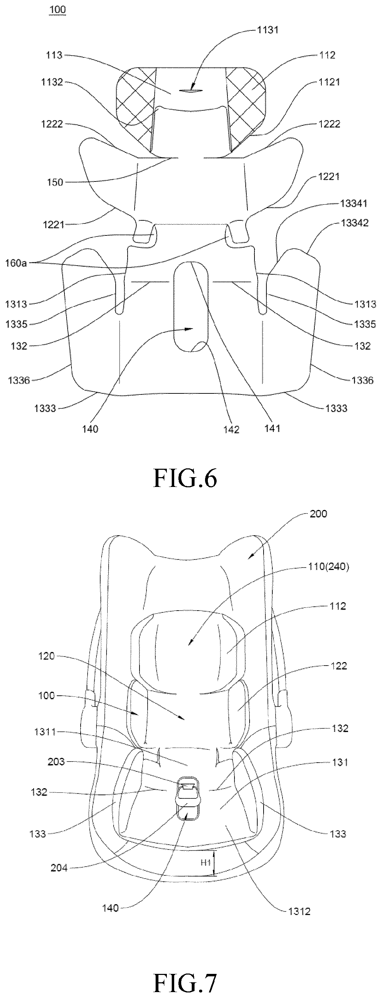

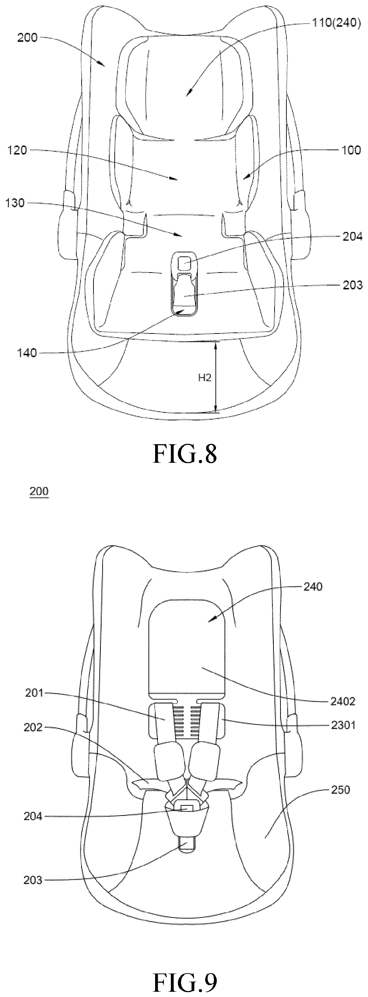

Referring to Figs. 1, 5, and 6, Fig. 5 is the front view, i.e., the side facing the seating space (towards the child) of the cushioning structure 100 according to this embodiment; and Fig. 6 is a back view, i.e., the side facing the seat body 210 (away from the child) of the cushioning structure 100 according to this embodiment. The cushioning structure 100 may be unfolded and laid flat after being removed from the child carrier 200, and may also be folded and placed within the seating space of the child carrier 200. The cushioning structure 100 of this embodiment includes a connecting unit 110, a backrest unit 120, and a seat unit 130. The connecting unit 110 is configured to connect to the headrest part 240 of the child carrier 200, the backrest unit 120 is connected to the connecting unit 110, and the seat unit 130 is connected to the backrest unit 120. Thus, as shown in Figs. 7 and 8, when the headrest part 240 of the child carrier 200 slides relative to the backrest part 230 to adjust a height position of the headrest part 240, the headrest part 240 may drive the connecting unit 110 to slide together, and the connecting unit 110 drives the backrest unit 120 and the seat unit 130 to move along with the movement of the headrest part 240. This can adjust the position of the cushioning structure 100 while the user adjusts the position of the headrest part 240, to adjust the positions of the backrest unit 120 and the seat unit 130 to match the seated child.

Referring to Figs. 1, 5, and 6, the connecting unit 110 is also configured to support the child's head. The cushioning structure 100 has two shoulder belt channels 150 between the connecting unit 110 and the backrest unit 120, through which the shoulder belts of the child carrier 200 may pass.

Referring to Figs. 5 and 6, the connecting unit 110 includes a headrest cushion 111 and a connecting part 113. The headrest cushion 111 is connected to the backrest unit 120 and is configured to support the child's head. The connecting part 113 is connected to a back side of the headrest cushion 111 and is configured to connect with the headrest part 240 of the child carrier 200. The connecting part 113 may be connected to the back side of the headrest part 240 of the child carrier 200. In this embodiment, a part of the connecting part 113 is spaced from the back side of the headrest cushion 111 to form a pocket-like portion 1132. The connecting unit 110 is configured to sleeve the headrest part 240 of the child carrier 200, so as to accommodate the headrest part 240 within the pocket-like portion 1132, for example, wrap the headrest support sheet 2401 and the buffer 2402 within the pocket-like portion 1132. Furthermore, the connecting part 113 has an opening 1131 that is configured to reveal a position operating member on the headrest part 240. This can facilitate the user to operate the position operating member to adjust the position of the headrest part 240.

In this embodiment, the connecting part 113 is a sheet-like structure (e.g., a fabric sheet), and an upper edge and left and right edges of the connecting part 113 are fixed to the headrest cushion 111 (e.g., by sewing threads). An opening 1131 of the pocket-like portion 1132 faces downward. The connecting part 113 covers roughly half of an area of an upper portion of the back side of the headrest part 240, and the pocket-like portion 1132 sleeves the upper portion of the headrest part 240. In other embodiments, the connecting part 113 may be a binding strap or snap fastener structure connected to the back side of the headrest cushion 111.

Referring to Figs. 1, 5, and 6, the seat unit 130 is configured to support the child's hip and/or legs. The seat unit 130 has a crotch belt perforation 140 that extends in a longitudinal direction of the seat unit 130 to form a strip-like shape. The crotch belt perforation 140 allows the crotch belt 203 of the child carrier 200 to pass through. As the cushioning structure 100 moves along with the sliding of the headrest part 240, the crotch belt perforation 140 slides along with the seat unit 130 without interfering with the crotch belt 203. This can ensure that the position of the crotch belt 203 remains unaffected by the position adjustments of the seat unit 130, thereby maintaining a restraining function of the crotch belt 203 for the child.

Referring to Figs. 1, 5, and 6, the seat unit 130 includes a seat cushion 131, a dividing part 132, and two first side guards 133. The seat cushion 131 is configured to support the child's hip and/or legs. The dividing part 132 is connected to the seat cushion 131 and divides the seat cushion 131 into a first seating area 1311 and a second seating area 1312. The first seating area 1311 is connected between the backrest unit 120 and the second seating area 1312, to allow the seat cushion 131 to be folded at the dividing part 132. The first seating area 1311 is configured to generally support the child's hip area, while the second seating area 1312 is configured to generally support the child's leg area. However, the specific areas supported by the first and second seating areas 1311 and 1312 may vary for the children at different heights and proportions. The dividing part 132 may be a structure such as stitching thread or a riveted buckle, or a thinner portion of the seat cushion 131. The two first side guards 133 are attached to both sides of the seat cushion 131 to provide lateral protection for the lower body of the child. In this embodiment, the first side guards 133 are fixedly connected to the seat cushion 131 (e.g., by sewing). However, in other embodiments, the first side guards 133 may also be detachably connected to the seat cushion 131, and whether the user chooses to attach the first side guards 133 as needed is not limited here. Additionally, in other embodiments, the seat cushion 131 may have only one seating area or may be divided into three or more seating areas, which is not limited here.

It should be noted that the presence of the first seating area 1311 and the second seating area 1312 can allow the seat unit 130 to be easily deformed to fit the bodies of different children during position adjustment. For instance, the first seating area 1311 may be adjusted to a lower position to accommodate shorter children (as shown in Fig. 7), where bending degree of the first seating area 1311 and the second seating area 1312 is minimal or nearly flat on the seat part 220 of the child carrier 200, and the first seating area 1311 is used to support the lower part of the child's hip. Conversely, the first seating area 1311 may be adjusted to a higher position to accommodate taller children (as shown in Fig. 8), where blending degree of the first seating area 1311 and the second seating area 1312 is more pronounced, and the first seating area 1311 is used to support the back side of the child's hip. In this embodiment, the seat unit 130 has a reduced thickness at the dividing part 132, facilitating easy folding.

As an example of the cushioning structure 100 shown in Fig. 5, a top-to-bottom direction on a plane of Fig. 5 is taken as a longitudinal direction of the cushioning structure 100, and the longitudinal direction is also an extension direction of lengths of the connecting unit 110, the backrest unit 120, and the seat unit 130. A left-to-right direction on a plane of Fig. 5 is taken as a transverse direction of the cushioning structure 100, and the transverse direction is also a width direction of the connecting unit 110, the backrest unit 120, and the seat unit 130. Referring to Figs. 5 and 6, along the longitudinal direction of the cushioning structure 100, an extension length of the first seating area 1311 is shorter than an extension length of the second seating area 1312. The crotch belt perforation 140 in strip-like shape extends from the second seating area 1312 to the first seating area 1311. When the cushioning structure 100 is configured to support a smaller child and the seat unit 130 is pulled away from the backrest unit 230, the first seating area 1311 may not interfere with the crotch belt. Furthermore, along the longitudinal direction of the cushioning structure 100, an extension length of the crotch belt perforation 140 in the first seating area 1311 is shorter than an extension length of the crotch belt perforation 140 in the second seating area 1312. As shown in Figs. 5 and 6, the crotch belt perforation 140 is approximately positioned in the middle of the extension length of the seat cushion 131.

Referring to Figs. 1, 5, and 6, the cushioning structure 100 includes two sets of waist belt cooperation parts spaced apart along the transverse direction of the cushioning structure 100. Each set of the waist belt cooperation parts includes two waist belt channels arranged in a transverse direction, so that the cushioning structure 100 is configured to match the two width modes of the waist belts 202 of the child carrier 200. Each set of the waist belt cooperation parts includes a first waist belt channel 160a and a second waist belt channel 160b, through which the waist belt 202 of the child carrier 200 may pass. The first waist belt channel 160a and the second waist belt channel 160b are arranged spaced apart along the transverse direction of the cushioning structure 100. The second waist belt channel 160b is positioned on the outer side of the first waist belt channel 160a in the transverse direction of the seat cushion 131. In this embodiment, the second waist belt channel 160b is positioned at a side edge of the seat cushion 131. A part of the second waist belt channel 160b extends beyond the first waist belt channel 160a along the longitudinal direction of the seat cushion 131 towards a free end of the seat cushion 131. Thereby, when the cushioning structure 100 is moved to match older or taller child, the seat cushion 131 is retracted towards the backrest part 230 of the child carrier 200, and the second waist belt channel 160b may provide a long space for the waist belt 202, so that the cushioning structure 100 may be more versatile.

Specifically, an end of the first seating area 1311 away from the second seating area 1312 is provided with a first waist belt channel 160a, and the seat cushion 131 is provided with a guide channel 160c that extends inward from the side edge 1313 of the seat cushion 131 and communicates with the first waist belt channel 160a. The waist belts 202 of the child carrier 200 may enter the first waist belt channel 160a through the guide channel 160c to position the waist belt 202. The side edge 1313 of the seat cushion 131 is provided with a second waist belt channel 160b, and can restrict the movement of the waist belts 202.

It should be noted that in other embodiments, each set of the waist belt cooperation parts of the cushioning structure 100 may include only one waist belt channel, for example, only the first waist belt channel 160a or only the second waist belt channel 160b. Each set of the waist belt cooperation parts of the cushioning structure 100 may also include three or more waist belt channels, to enable the cushioning structure 100 to match width modes of the waist belt 202 of the child carrier 200 in different levels.

Referring to Figs. 5 and 6, the first side guard 133 includes a first portion 1331 and a second portion 1332. The second portion 1332 is connected to the first portion 1331 along the longitudinal direction of the seat cushion 131 and is positioned closer to the backrest unit 120 relative to the first portion 1331. The first portion 1331 is connected to the seat cushion 131 (more specifically, the first portion 1331 is connected to the second seating area 1312), and the second portion 1332 is spaced apart from the seat cushion 131. Therefore, this can facilitate the extension of the second waist belt channel 160b into a partition space 134 between the second portion 1332 and the seat cushion 131 while ensuring the connection between the first side guard 133 and the seat cushion 131. When the seated child has a larger and wider physique, the waist belts 202 need to be positioned in the second waist belt channel 160b, and the seat unit 130 may move towards the backrest unit 230. In this embodiment, the first side guard 133 can be prevented from interfering with the waist belts 202 by spacing the second portion 1332 apart from the seat cushion 131. Additionally, a portion of the seat cushion 131 near the backrest unit 120 (for example, the first seating area 1311 and the portion of the second seating area 1312 near the first seating area 1311) may be occupied by the child's hip area to be deformed due to compression (for example, this portion may conform to the child's hip and may be recessed inward). In this embodiment, by spacing the second portion 1332 apart from the seat cushion 131, it can prevent the first side guard 133 from deforming along with the seat cushion 131, and avoid affecting the comfort and safety of the child's seating due to the distortion and twisting of the first side guard 133.

Referring to Figs. 5 and 6, the first side guard 133 has a first end 1333 and a second end 1334 arranged opposite to each other. The second end 1334 of the first side guard 133 (for example, a free end of the second portion 1332) is positioned closer to the backrest unit 120 relative to the first end 1333 of the first side guard 133. The second end 1334 of the first side guard 133 is provided with a first inclined edge 13341 and a second inclined edge 13342. The first inclined edge 13341 and the second inclined edge 13342 are connected, more specifically, they are connected with a rounded arc transition.

Referring to Figs. 5 and 6, more specifically, the first side guard 133 has a first side 1335 and a second side 1336 arranged opposite to each other. The first side 1335 of the first side guard 133 is connected to the seat cushion 131. The first inclined edge 13341 extends obliquely from a side edge of the first side guard 133 (i.e., the first side 1335 of the first side guard 133), towards a direction away from the side edge 1313 of the seat cushion 131, so that the second end 1334 of the first side guard 133 may make way for the side edge 1313 of the seat cushion 131. In other words, the first inclined edge 13341 extends obliquely from the first side 1335 of the first side guard 133 towards the second side 1336 of the first side guard 133 and towards a direction away from the first end 1333 of the first side guard 133. When the seat unit 130 of the cushioning structure 100 is folded, the side edge 1313 of the seat cushion 131 (for example, the side edge 1313 of the first seating area 1311) may fold towards the first side guard 133. Compared to the first side of the first side guard, which extends roughly in a straight line, the first inclined edge 13341 in this embodiment is provided to avoid interference between the second end 1334 of the first side guard 133 and the side edge 1313 of the seat cushion 131, and thereby allow the second end 1334 of the first side guard 133 to make way for the side edge 1313 of the seat cushion 131. In some scenarios, when the first seating area 1311 is positioned at a higher level and folded at a large angle relative to the second seating area 1312, the first inclined edge 13341 may abut against the side edge 1313 of the seat cushion 131. In other scenarios, for example, when the first seating area 1311 is essentially laid flat on the seat part 220, the first inclined edge 13341 and the side edge 1313 of the seat cushion 131 are spaced apart.

Referring to Figs. 5 and 6, the extension direction of the second inclined edge 13342 is different from that of the first inclined edge 13341. The second inclined edge 13342 extends obliquely from the other side edge of the first side guard 133 (i.e., the second side 1336 of the first side guard 133) away from the first end 1333 of the first side guard 133.

Referring to Figs. 5 and 6, the backrest unit 120 includes a backrest cushion 121 and two second side guards 122 connected to both sides of the backrest cushion 121. The backrest cushion 121 is configured to support the child's back. Each of the second side guards 122 has a first edge 1221 and a second edge 1222 arranged opposite to each other along a longitudinal direction of the cushioning structure 100. The first edge 1221 is positioned on a side of the second side guard 122 closer to the first side guard 133, and the second edge 1222 is positioned closer to the connecting unit 110 relative to the first edge 1221. Compared to the second side 1336 of the first side guard 133, which extends roughly in a straight line, the second inclined edge 13342 in this embodiment is provided to allow the second end 1334 of the first side guard 133 to make way for the second side guard 122, and thereby avoiding the interference between the second side guard 122 and the second end 1334 of the first side guard 133 when the backrest unit 120 is positioned lower. It should be noted that the first edge 1221 extends outwardly obliquely away from the seat unit 130. When the backrest unit 120 is adjusted to a lower position, the second inclined edge 13342 may abut against the first edge 1221, and the first side guard 133 may assist to support the second side guard 122. In this embodiment, the second side guard 122 is fixedly connected to the backrest cushion 121 (e.g., by sewing). In other embodiments, the second side guard 122 may also be detachably connected to the backrest cushion 121, and whether the user chooses to connect the second side guard 122 as needed is not limited here.

Referring to Figs. 5 and 6, the connecting unit 110 also includes two third side guards 112 connected to both sides of the headrest cushion 111. Each of the third side guards 112 has a third edge 1121 facing to the second edge 1222 of the second side guard 122. The second edge 1222 extends obliquely, and the third edge 1121 also extends obliquely to match with the second edge 1222. It should be noted that the edges of the first side guard 133, the second side guard 122, and the third side guard 112 may be designed as straight edges or curved edges according to actual needs, which is not limited here. Additionally, the cushioning structure 100 may not include the first side guard 133, the second side guard 122, or the third side guard 112. It should be noted that the connecting unit 110 of the cushioning structure 100 may not include the headrest cushion 111 and the third side guard 112, instead, the headrest part 240 of the child seat may directly abut against and support the child's head. For example, the headrest part 240 is provided with a connecting hole or a connecting buckle, and the connecting unit is a strap-like structure (e.g., a binding strap) connected to the backrest unit 120, which passes through the connecting hole to bind together with the headrest part 240, or the connecting unit is a cooperating buckle connected to the backrest unit 120, which buckles together with the connecting buckle of the headrest part 240.

Referring to Figs. 1, 7, and 8, the cushioning structure 100 is positioned within the seating space of the child carrier 200, and the connecting unit 110 of the cushioning structure 100 is connected to the headrest part 240. When the headrest part 240 slides relative to the backrest part 230 in a direction away from the seat part 220 (i.e., when the height position of the headrest part 240 is raised), for example, as the headrest part 240 moves from the lower position in Fig. 7 to the higher position in Fig. 8, a distance between the free edge of the seat unit 130 of the cushioning structure 100 and the free edge of the seat part 220 is increased, i.e., the distance increases from H1 to H2. When the headrest part 240 slides relative to the backrest part 230 in a direction towards the seat part 220 (i.e., when the height position of the headrest part 240 is decreased), for example, as the headrest part 240 moves from the higher position in Fig. 8 to the lower position in Fig. 7, the distance between the free edge of the seat unit 130 of the cushioning structure 100 and the free edge of the seat part 220 is decreased, i.e., the distance decreases from H2 to H1.

As shown in Figs. 7 and 8, when the position of the headrest part 240 is adjusted, the seat unit 130 is driven to move, and the position of the crotch belt 203 within the crotch belt perforation 140 may also be changed. The crotch belt perforation 140 has a first end 141 and a second end 142 arranged opposite to each other, and the first end 141 of the crotch belt perforation 140 is closer to the backrest unit 120 relative to the second end 142 of the crotch belt perforation 140. In Fig. 7, the crotch belt 203 is positioned within the crotch belt perforation 140 and is close to the first end 141 of the crotch belt perforation 140. In Fig. 8, the crotch belt 203 is positioned within the crotch belt perforation 140 and is close to the second end 142 of the crotch belt perforation 140.

Referring to Fig. 1, the child carrier system includes a head contact surface and a back contact surface. The head contact surface is provided on the connecting unit 110 and is configured to engage with and support the child's head. The back contact surface is positioned on the backrest unit 120 of the cushioning structure 100 and is configured to contact with and support the child's back. Along a direction perpendicular to the head contact surface, the head contact surface is retracted towards the seat body 210 relative to the back contact surface. The retracted distance may be greater than 0mm and shorter than or equal to 15mm. Thereby, the risk of the child's head bending and tilting towards his/her back can be reduced, and it is conducive to the child's smooth breathing. In other embodiments, the connecting unit 110 of the cushioning structure 100 does not support the child's head, and the headrest part 240 of the child carrier 200 is configured to contact with and support the child's head, and the head contact surface is provided on the headrest part 240 of the child carrier 200.

Hereinafter, the user's operation process in this embodiment will be described.

Referring to Figs. 1, 7, and 8, the user first connects the cushioning structure 100 to the child carrier 200, connects the connecting unit 110 of the cushioning structure 100 to the headrest part 240 of the child carrier 200, exposes the position operating member of the headrest part 240 out of the opening 1131 of the connecting part 113, allow the shoulder belts 201, the waist belts 202, and the crotch belt 203 to respectively pass through the shoulder belt channels 150, the waist belt channels (either the first waist belt channel 160a or the second waist belt channel 160b), and the crotch belt perforation 140 of the cushioning structure 100, so that the cushioning structure 100 is positioned within the seating space of the child carrier 200. When the child is seated, the user, according to the child's height and body size, may adjust the position of the headrest part 240 to a suitable position by operating the position operating member on the headrest part 240 and moving the headrest part 240. During the movement of the headrest part 240, the headrest part 240 drives the movement of the connecting unit 110, the backrest unit 120, and the seat unit 130, to move the backrest unit 120 and seat unit 130 to match with the child's body. The child is seated in the seating space, supported by the cushioning structure 100, and secured by fastening the safety belts.

Referring to Fig. 9, a schematic view of a child carrier 200 as provided in a second embodiment according to the present disclosure is shown. The child carrier 200 in the second embodiment may also include a seat body 210, a safety belt connected to the seat body 210, and a cover 250 fitted over the seat body 210. The child carrier 200 in this embodiment is a variation of the child carrier 200 in the aforementioned first embodiment. Unless otherwise conflicted, the structure of the components and the connections between the components of the child carrier 200 in this embodiment can refer to the descriptions provided in the first embodiment above. In the following, the differences between this embodiment and the aforementioned first embodiment will be mainly described.

Referring to Fig. 9, compared to the first embodiment, the second embodiment has made modifications to the child carrier, with the main difference in that in the child carrier 200 of the second embodiment, in addition to the headrest part 240 (which also includes the headrest support sheet 2401 and the buffer 2402) protruding from the cover 250, the backrest support sheet 2301 connected to the headrest support sheet 2401 also protrudes from the cover 250. The other components and corresponding connections of the child carrier 200 in the second embodiment are similar to those in the first embodiment, and will not be repeated here.

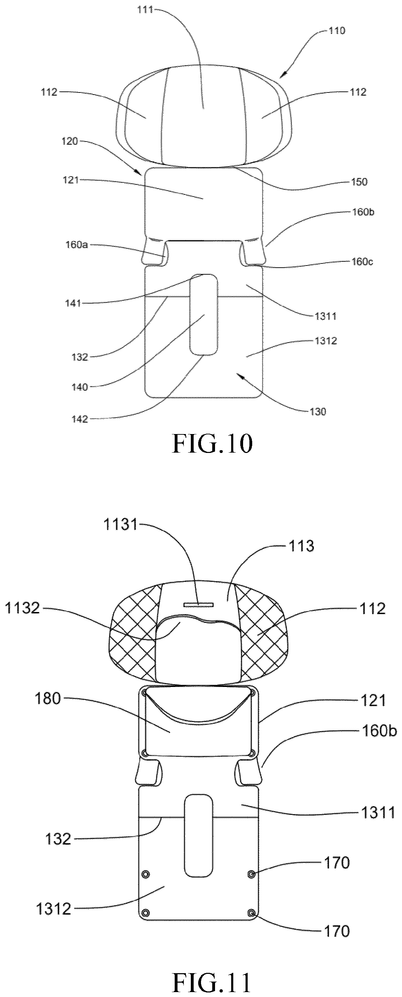

Referring to Figs. 10 to 14, similar to the first embodiment, the cushioning structure 100 of the second embodiment may include a connecting unit 110, a backrest unit 120, a seat unit 130, a crotch belt perforation 140, shoulder belt channels 150, first waist belt channels 160a, second waist belt channels 160b, and guide channels 160c. The connecting unit 110 may include a headrest cushion 111, third side guards 112, a connecting part 113, an opening 1131, and a pocket-like portion 1132. The backrest unit 120 may include a backrest cushion 121. The seat unit may include a seat cushion 131, a first seating area 1311, a second seating area 1312, and a dividing part 132. The cushioning structure 100 in this embodiment is a variation of the cushioning structure 100 in the aforementioned first embodiment. Unless otherwise conflicted, the structure of the components and the connections between the components of the cushioning structure 100 in this embodiment can refer to the descriptions provided in the first embodiment above. In the following, the differences between this embodiment and the aforementioned first embodiment will be described, which will not be repeated here.

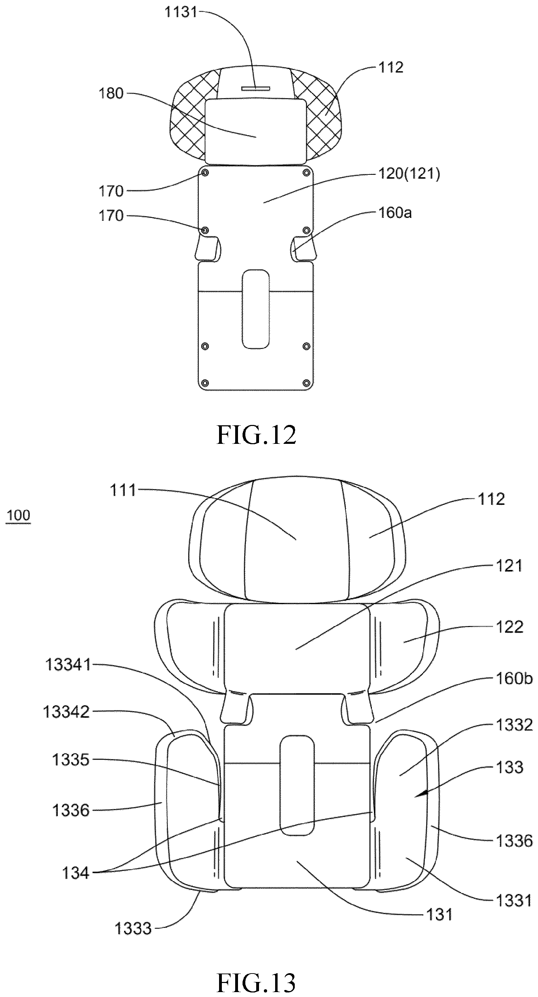

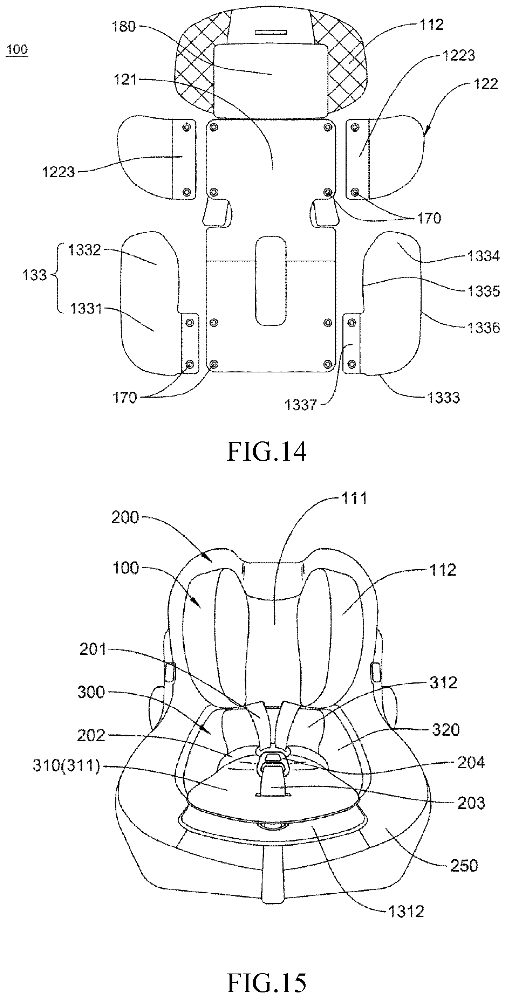

Referring to Figs. 13 and 14, compared to the first embodiment, in the cushioning structure 100 of the second embodiment, the seat cushion 131 is detachably connected with the two first side guards 133, and the backrest cushion 121 is detachably connected with the two second side guards 122. Specifically, a connecting structure 170 is provided between the seat cushion 131 and the first side guards 133 to achieve detachable connection. The connecting structure 170 may be a snap fastener (as shown in Fig. 14), Velcro, webbing, or other similar structures. Similarly, a connecting structure 170 is provided between the backrest cushion 121 and the second side guards 122 to achieve detachable connection.

In this embodiment, the first side guard 133 is provided with an extension part 1337 (also referred to as a first extension part 1337), and the second side guard 122 is provided with an extension part 1223 (also referred to as a second extension part 1223). The connecting mechanism 170 is a snap fastener, which includes a female part and a male part fit together. One of the female part and the male part is provided on the back side of the seat cushion 131 and the back side of the backrest cushion 121; and the other one of the female part and the male part is provided on the extension part 1337 of the first side guard 133 and the extension part 1223 of the second side guard 122. When the first side guard 133 is connected to the seat cushion 131 and the second side guard 122 is connected to the backrest cushion 121, the extension part 1337 of the first side guard 133 is obscured by the seat cushion 131, and the extension part 1223 of the second side guard 122 is obscured by the backrest cushion 121. Moreover, the connecting mechanism 170 is positioned on the back side of the seat cushion 131 and the back side of the backrest cushion 121. Thus, the seating experience cannot be affected.

Referring to Figs. 11, 12, and 13, compared to the first embodiment, the cushioning structure 100 of the second embodiment may further include a connecting body 180. The connecting body 180 is connected to the connecting unit 110 and positioned on the back side of the connecting unit 110, or the connecting body 180 is connected to the backrest unit 120 and positioned on the back side of the backrest unit 120. The connecting body 180 is configured to connect with a structure that is positioned below the headrest part 240 in the child carrier 200 and is movable with the headrest part 240. This can increase the connection stability between the cushioning structure 100 and the child carrier 200, and reduce the risk of preventing the headrest part 240 from driving the movement of the cushioning structure 100 due to the headrest part 240 separating from the cushioning structure 100. Specifically, in this embodiment, the connecting body 180 is configured to connect to the backrest support sheet 2301, and the backrest support sheet 2301 is connected to the headrest support sheet 2401, so that the backrest support sheet 2301 can move along with the movement of the headrest part 240.

Specifically, in this embodiment, the connecting body 180 is connected to the lower end of the headrest cushion 111 of the connecting unit 110 (for example, at a connection between the headrest cushion 111 and the backrest cushion 121). The connecting body 180 is pocket-shaped and is configured to sleeve the outside of the backrest support sheet 2301. When the cushioning structure 100 is not yet connected to the child carrier 200, the connecting body 180 may be flipped up (as shown in Figs. 12 and 14) or flipped down (as shown in Fig. 11). After the connecting body 180 is connected to the backrest support sheet 2301 (or after the connecting body 180 is flipped down around the connection between the connecting body 180 and the headrest part 240), as viewed from the front-to-back direction, the connecting body 180 at least partially overlaps with the backrest unit 120 (as shown in Fig. 11). After the connecting body 180 is fitted over the backrest support sheet 2301, the backrest support sheet 2301 exposed out of the cover 250 may be obscured, and the backrest unit 120 is positioned in front of the connecting body 180 and may obscure the connecting body 180, so that the child may be seated on a front side of the cushioning structure 100. In this embodiment, the connecting body 180 is a fabric cover fitted over the backrest support sheet 2301, and the connecting body 180 and the backrest unit 120 are stacked together, so that the thickness of the cushioning structure 100 can be increased to enhance the comfort for the child. The connecting body 180 may be fixedly connected (e.g., by sewing) or detachably connected (e.g., by a snap fastener, a Velcro, etc.) to the connecting unit 110 or the backrest unit 120. In other embodiments, the connecting body 180 may also be a binding strap, a buckle, or other similar structures.

In use, compared to the first embodiment, it is necessary to add a step of connecting the connecting body 180 to the backrest support sheet 2301 into the cushioning structure 100 of the second embodiment. Other operation processes can refer to the operation process in the aforementioned first embodiment, which will not be repeated here. It is understandable that the user may choose whether to remove the first side guard and the second side guard according to actual needs. When the first side guard and the second side guard are removed, the seating space of the cushioning structure is relatively large, suitable for the child with large body size or old age; when the seat cushion is connected to the first side guard and the backrest cushion is connected to the second side guard, the seating space of the cushioning structure is relatively small, suitable for the child with small body size or young age.

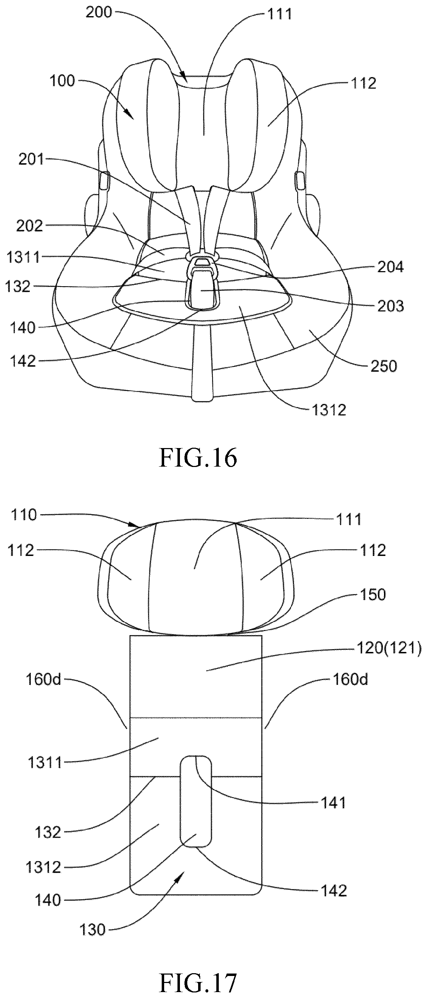

Referring to Figs. 15 and 16, two usage modes of a child carrier system as provided in a third embodiment according to the present disclosure are shown. Fig. 15 illustrates a safety belt and a cover 250 fitted over the child carrier 200, and the headrest part 240 being in a lower position; Fig. 16 shows a safety belt and a cover 250 fitted over the child carrier 200, and the headrest part 240 being in a higher position.

The child carrier system in the third embodiment may include a child carrier 200 and a cushioning assembly. The cushioning assembly may include a cushioning structure 100 and a cushion body 300. The cushioning structure 100 is detachably connected to the child carrier 200, and the cushion body 300 is detachably connected to the cushioning structure 100. Thus, the cushioning assembly may include a first usage mode and a second usage mode. As shown in Fig. 15, when the cushioning assembly is in the first usage mode, the cushioning structure 100 may be used in combination with the cushion body 300. The cushion body 300 is placed on the cushioning structure 100 for the child to be seated, and both the cushioning structure 100 and the cushion body 300 are positioned within the seating space of the child carrier 200. As shown in Fig. 16, when the cushioning assembly is in the second usage mode, the cushion body 300 is removed from the cushioning structure 100, so that the cushioning structure 100 may be used separately on the child carrier 200. The cushioning structure 100 is positioned within the seating space of the child carrier 200 for the child to be seated. The cushion body 300 may also be referred to as an auxiliary cushion or an additional cushion. When using the cushion body 300, the child safety seat is suitable for the child with small body size or young age, such as for newborns.

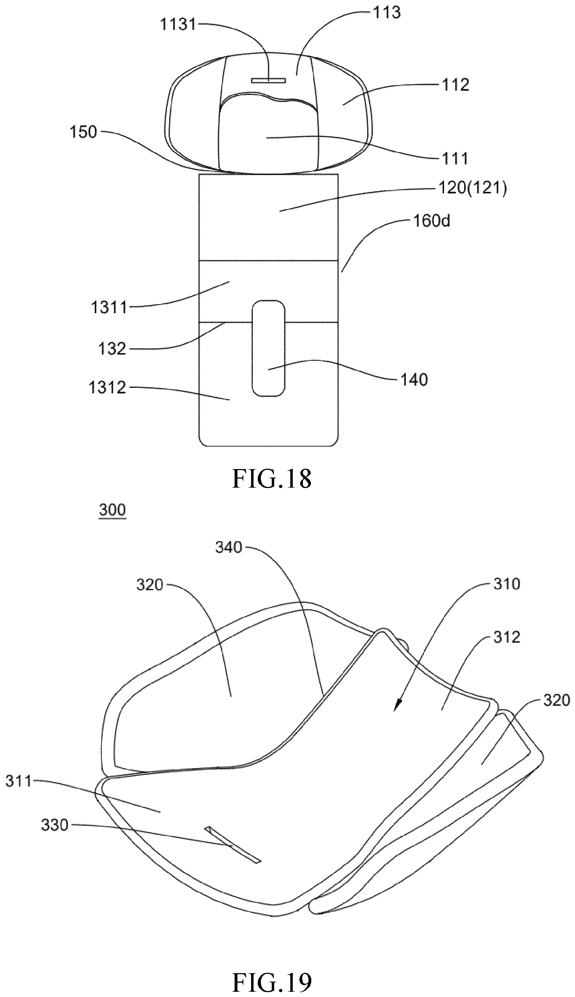

Referring to Figs. 17 and 18, similar to the first embodiment, the cushioning structure 100 in the third embodiment may include a connecting unit 110, a backrest unit 120, a seat unit 130, a crotch belt perforation 140, and shoulder belt channels 150. The connecting unit 110 may include a headrest cushion 111, third side guards 112, a connecting part 113, an opening 1131, and a pocket-like portion 1132. The backrest unit 120 may include a backrest cushion 121. The seat unit 130 may include a seat cushion 131, a first seating area 1311, a second seating area 1312, and a dividing part 132. The cushioning structure 100 in this embodiment is a variation of the cushioning structure 100 in the aforementioned first embodiment. Unless otherwise conflicted, the components included in the cushioning structure 100 of this embodiment and the connections between different components can refer to the descriptions provided in the first embodiment above. In the following, the differences between this embodiment and the aforementioned first embodiment will be described, and the same portions will not be repeated here.

In the third embodiment, the cushioning structure 100 is not provided with the first waist belt channel 160a and the guide channel 160c, but being provided with two waist belt passages 160d on both sides of the seat cushion 131. The two waist belts 202 may pass through the two waist belt passages 160d, respectively.

Referring to Figs. 19 to 21, the cushion body 300 as provided in the third embodiment is schematically shown. The cushion body 300 may include a main body 310 and two fourth side guards 320 that are configured to connect to both sides of the main body 310. The fourth side guards 320 may be detachably or fixedly connected to the main body 310. The cushion body 300 forms a seating space for a child by connecting the two fourth side guards 320 with the main body 310(as shown in Fig. 19). In this embodiment, when the cushion body 300 is placed on the cushioning structure 100, the main body 310 of the cushion body 300 may at least partially cover the seat unit 130 and the backrest unit 120 of the cushioning structure 100, the headrest cushion 111 of the cushioning structure 100 is provided above the cushion body 300. The cushioning assembly may mainly support the child through the cushion body 300 and the connecting unit 110 of the cushioning structure 100.

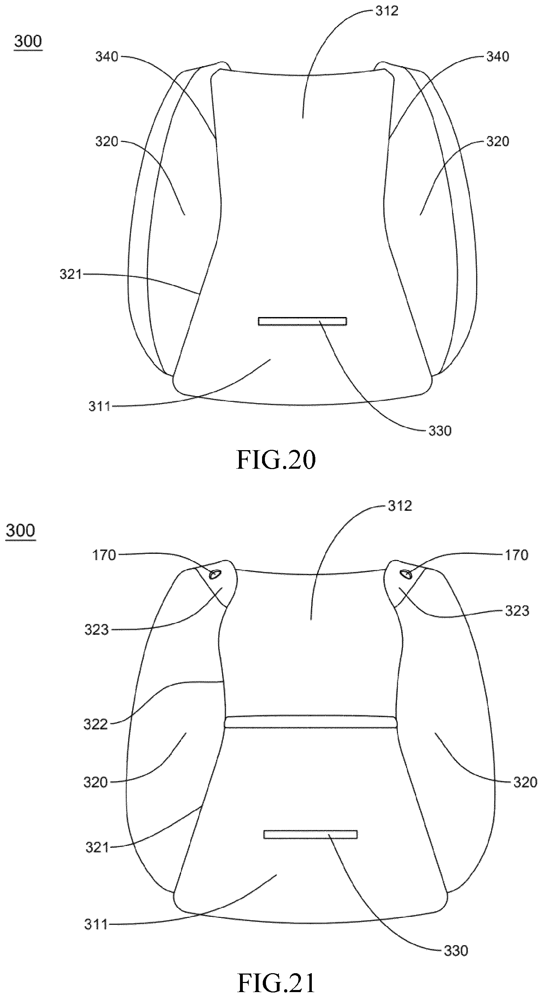

Referring to Figs. 19 to 21, the main body 310 may include a first main area 311 and a second main area 312 that are connected to each other. The first main area 311 has a penetration hole 330, through which the crotch belt 203 of the child carrier 200 may pass. In this embodiment, the penetration hole 330 extends in a strip-like shape along a transverse direction of the cushion body 300 (taking the left and right direction on a plane of Fig. 20 or Fig. 21 as the transverse direction of the cushion body 300). The two fourth side guards 320 are respectively connected (fixedly or detachably) to the sides of the first main area 311 and are also detachably connected to the sides of the second main area 312. When the two fourth side guards 320 are detached from the second main area 312, the cushion body 300 may be flattened for easy storage. When the two fourth side guards 320 are connected to both the first main area 311 and the second main area 312, the first main area 311 and the second main area 312 may be folded at their connection at an angle to each other. In this embodiment, an angle between the first main area 311 and the second main area 312 is greater than 90 degrees and less than 180 degrees, and it roughly matches an angle between the seat part 220 and the backrest part 230 of the child carrier 200.

Furthermore, a connecting structure 170 is provided between the fourth side guard 320 and the second main area 312, so that a detachable connection may be achieved. This connecting structure 170 may be a snap fastener, a Velcro, a connecting webbing, or similar structures. In this embodiment, the connecting structure 170 is the snap fastener, which includes a female part and a male part matched with each other. One of the female part and the male part is provided on the back side of the second main area, and the other one of the female part and the male part is provided on the extension part 323 (or third extension part 323) of the fourth side guard 320. When the female part and the male part are connected, the extension part 323 of the fourth side guard 320 is positioned on the back side of the second main area 312, and when the cushion body 300 is in use, the extension part 323 of the fourth side guard 320 is obscured by the second main area 312. It should be noted that in other embodiments, the two fourth side guards 320 may also be fixedly connected to the sides of the second main area 312, and the two fourth side guards 320 may be detachably connected to the sides of the first main area 311. This can allow the cushion body 300 to be flattened for storage when not in use. Alternatively, the two fourth side guards 320 may be completely detachable from the main body 310 (for example, the fourth side guards 320 may be detachably connected to both the first main area 311 and the second main area 312 through the connecting structure 170), and the two fourth side guards 320 may be connected to the main body 310 when the cushion body 300 needs to be used. Alternatively, in other embodiments, the fourth side guard 320 may be permanently fixed to the main body 310, with no detachable positions, at this time, the cushion body 300 may always maintain a three-dimensional shape as shown in Fig. 19, and the cushion body 300 cannot be flattened.

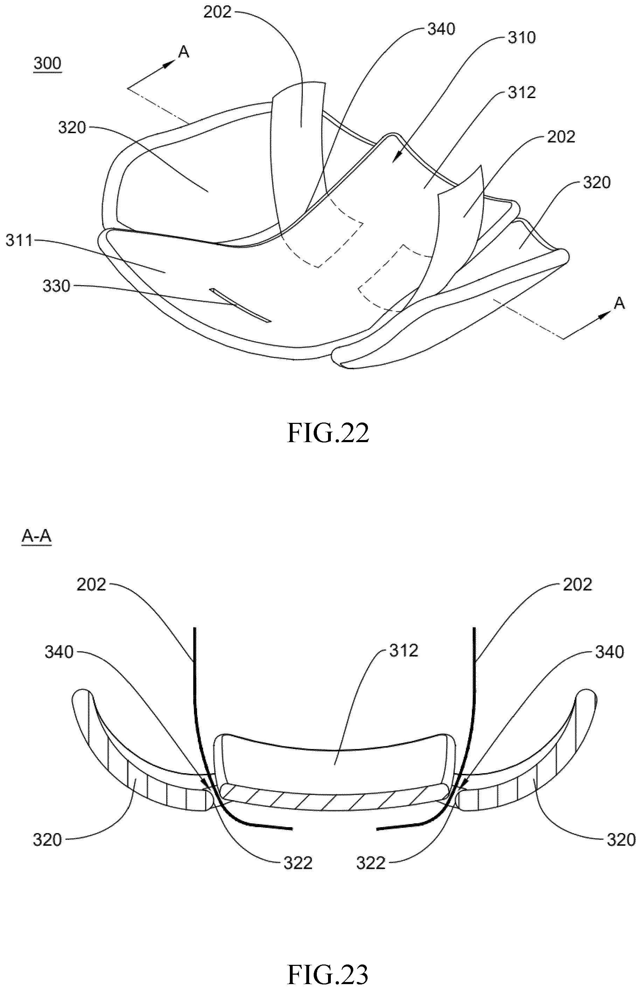

Furthermore, as shown in Figs. 20 and 23, when the fourth side guard 320 is connected to the second main area 312, a penetration part 340 is formed between each of the fourth side guards 320 and a corresponding side of the second main area 312. The waist belt 202 passes through the penetration part 340. The waist belt 202, after passing out of the waist belt passage 160d, may further pass through the penetration part 340.

In this embodiment, the first main area 311 has a width that gradually increases from an end connected to the second main area 312 towards an end away from the second main area 312 (or referred to as the free end of the first main area 311). Similarly, the second main area 312 has a width that gradually increases from an end connected to the first main area 311 towards an end away from the first main area 311 (or referred to as the free end of the second main area 312). The fourth side guard 320 has a first side edge 321 and a second side edge 322, which are arranged at an angle. The first side edge 321 is connected to the first main area 311, and the second side edge 322 is configured to cooperate with the second main area 312. The extension part 323 of the fourth side guard 320 protrudes from the second side edge 322 and is positioned at an end of the fourth side guard 320 away from the first main area 311. The fourth side guard 320 is roughly fan-shaped, and when the fourth side guard 320 is connected to the main body 310, the two fourth side guards 320 expand outward from both sides of the main body 310 in a width direction.

It can be understood that if the cushioning structure 100 and the cushion body 300 are used together, the seating space may be small, at this time, the child carrier system is suitable for the child with small body size or young age. If the cushion body 300 is removed, and the cushioning structure 100 is used separately to be placed in the child carrier 200, at this time, the child carrier system may be suitable for the child with large body size or old age. Typically, when the cushioning structure 100 and the cushion body 300 are used together, suitable for the child with small body size or young age, the headrest part 240 of the child carrier 200 may be adjusted to a lower position, and the free edge of the seat unit 130 of the cushioning structure 100 may move forward, as shown in Fig. 15, the free edge of the seat unit 130 extends forward beyond the cushion body 300, and a portion of the seat unit 130 may be exposed.

Hereinafter, the user operation process in the third embodiment will be described.

Referring to Figs. 15 and 16, the user connects the cushioning structure 100 to the child carrier 200, connects the connecting unit 110 of the cushioning structure 100 to the headrest part 240 of the child carrier 200, exposes the position operating member of the headrest part 240 out of the opening 1131 of the connecting part 113, and then passes the shoulder belt 201, the waist belts 202, and the crotch belt 203 respectively through the shoulder belt channels 150, the waist belt passages 160d, and the crotch belt perforation 140 of the cushioning structure 100, so that the cushioning structure 100 is positioned within the seating space of the child carrier 200.

The cushioning structure 100 is separately used to provide a seating space for the child with large body size or old age. When the child is seated on the cushioning structure 100, the user adjusts the position of the headrest part 240 to a suitable position according to the child's height and body size (for example, the higher position as shown in Fig. 16) by operating the position operating member on the headrest part 240 and moving the headrest part 240. During the movement of the headrest part 240, the headrest part 240 drives the movement of the connecting unit 110, the backrest unit 120, and the seat unit 130 to move the backrest unit 120 and the seat unit 130 to match the child's body. The child is seated in the seating space, supported by the cushioning structure 100, and secured by fastening the safety belt.

The cushioning structure 100 is used in combination with the cushion body 300 to provide a seating space for the child with small body size or young age. The headrest part 240 is adjusted to a suitable position (for example, the lower position as shown in Fig. 15) to move the connecting unit 110, the backrest unit 120, and the seat unit 130 to match with the child's body. The user places the cushion body 300 on the cushioning structure 100, passes the waist belts 202 of the child carrier 200 through the waist belt passages 160d of the cushioning structure 100 and the penetration part 340 of the cushion body 300, then connects the fourth side guard 320 and the main body 310 of the cushion body 300, and passes the crotch belts 202 through the crotch belt perforation 140 of the cushioning structure 100 and the penetration hole 330 of the cushion body 300, and then passes the shoulder belts 201 of the child carrier 200 through the shoulder belt channels 150 of the cushioning structure 100 and out of a gap between the headrest cushion 111 and the main body 310. The child is seated in the seating space, supported by both the cushioning structure 100 and the cushion body 300, and secured by fastening the safety belt. The various technical features described in the embodiments may be combined in any way. For the sake of brevity, not all possible combinations of the technical features in the embodiments have been described.

## Claims

1. A cushioning structure (100) suitable for a child carrier (200), comprising:
- a connecting unit (110) configured to connect to the headrest part (240) of the child carrier (200);
- a backrest unit (120) connected to the connecting unit (110); and
- a seat unit (130) connected to the backrest unit (120);
wherein the connecting unit (110) drives the backrest unit (120) and the seat unit (130) to move along with movement of the headrest part (240).

2. The cushioning structure (100) of claim 1, wherein the connecting unit (110) comprises:
- a headrest cushion (111) connected to the backrest unit (120) and configured to support a child's head; and
- a connecting part (113) connected to a back side of the headrest cushion (111) and configured to connect to the headrest part (240); wherein a part of the connecting part (113) is spaced apart from the back side of the headrest cushion (111) to form a pocket-like portion (1132), and the connecting unit (110) is configured to sleeve the headrest part (240) to accommodate the headrest part (240) within the pocket-like portion (1132).

3. The cushioning structure (100) of claim 1, wherein the seat unit (130) comprises:
- a seat cushion (131); and
- a dividing part (132) connected to the seat cushion (131) and in particular at least dividing the seat cushion (131) into a first seating area (1311) and a second seating area (1312), the first seating area (1311) being connected between the backrest unit (120) and the second seating area (1312), the seat cushion (131) in particular being folded at the dividing part (132).

4. The cushioning structure (100) of claim 3, wherein in a longitudinal direction of the cushioning structure (100), an extension length of the first seating area (1311) is shorter than an extension length of the second seating area (1312); and/or,
the seat unit (130) has a crotch belt perforation (140) in a strip-like shape extending from the second seating area (1312) to the first seating area (1311).

5. The cushioning structure (100) of claim 4, wherein in the longitudinal direction of the cushioning structure (100), an extension length of the crotch belt perforation (140) in the first seating area (1311) is shorter than an extension length of the crotch belt perforation (140) in the second seating area (1312).

6. The cushioning structure (100) of claim 3, wherein a first waist belt channel (160a) is provided on an end of the first seating area (1311) away from the second seating area (1312), and/or a guide channel (160c) is provided on the seat cushion (131), the guide channel (160c) in particular extends inward from a side edge (1313) of the seat cushion (131) and communicates with the first waist belt channel (160a); and/or wherein the seat cushion (131) is further provided with a second waist belt channel (160b) that is in particular positioned outside the first waist belt channel (160a) in a transverse direction of the seat cushion (131).

7. The cushioning structure (100) of claim 1, wherein the cushioning structure (100) comprises two sets of waist belt cooperation parts spaced apart in the transverse direction of the cushioning structure (100), in particular wherein each set of the waist belt cooperation parts has at least two waist belt channels (160a, 160b) arranged in the transverse direction, so that the cushioning structure (100) is configured to match at least two width modes of the waist belt (202) of the child carrier (200).

8. The cushioning structure (100) of claim 1, further comprising a connecting body (180) configured to connect to a structure that is movable with the headrest part (240) and below the headrest part (240) in the child carrier (200);
wherein the connecting body (180) is in particular connected to the connecting unit (110) and positioned on the back side of the connecting unit (110); or the connecting body (180) is in particular connected to the backrest unit (120) and positioned on the back side of the backrest unit (120).

9. The cushioning structure (100) of claim 1, wherein the seat unit (130) has a crotch belt perforation (140) in a strip-like shape extending along the longitudinal direction of the seat unit (130).

10. The cushioning structure (100) of claim 6, wherein a part of the second waist belt channel (160b) extends in a longitudinal direction of the seat cushion (131) towards a free end of the seat cushion (131) in particular beyond the first waist belt channel (160a).

11. A cushioning assembly suitable for a child carrier (200), comprising a cushion body (300) and the cushioning structure (100) according to claim 1, the cushioning assembly having a first usage mode and a second usage mode; wherein
when the cushioning assembly is in the first usage mode, the cushioning structure (100) is used in combination with the cushion body (300), and the cushion body (300) is placed on the cushioning structure (100) and configured to allow a child to be seated;
when the cushioning assembly is in the second usage mode, the cushion body (300) is removed from the cushioning structure (100), and the cushioning structure (100) is configured to allow the child to be seated.

12. The cushioning assembly of claim 11, wherein the cushion body (300) comprises a main body (310) and two fourth side guards (320) connected to both sides of the main body (310), wherein in particular a penetration part (340) is formed between each of the fourth side guards (320) and a side of the main body (310) corresponding to the fourth side guard (320), and the penetration part (340) is configured such that a waist belt (202) of the child carrier (200) may pass through it.

13. A child carrier system, comprising a child carrier (200) and the cushioning structure (100) according to claim 1, the cushioning structure (100) being detachably connected to the child carrier (200), wherein a seat body (210) of the child carrier (200) comprises:
- a seat part (220);
- a backrest part (230) connected to the seat part (220) and forming a seating space together with the seat part (220); and
- a headrest part (240) connected to the backrest part (230) and slidable relative to the backrest part (230) in a longitudinal direction of the backrest part (230); wherein the cushioning structure (100) is positioned within the seating space, and the connecting unit (110) of the cushioning structure (100) is connected to the headrest part (240).

14. The child carrier system of claim 13, wherein when the headrest part (240) slides relative to the backrest part (230) away from the seat part (220), a distance between a free edge of a seat unit (130) of the cushioning structure (100) and a free edge of the seat part (220) increases; and/or when the headrest part (240) slides relative to the backrest part (230) close to the seat part (220), a distance between the free edge of the seat unit (130) of the cushioning structure (100) and the free edge of the seat part (220) decreases.

15. The child carrier system of claim 13, wherein the child carrier (200) system comprises a head contact surface and a back contact surface, the head contact surface is provided on the headrest part (240) or the connecting unit (110), the head contact surface is configured to contact and support the child's head, wherein in particular the back contact surface is provided on a backrest unit (120) of the cushioning structure (100), the back contact surface is configured to contact and support the child's back, and wherein in particular in a direction perpendicular to the head contact surface the head contact surface is retracted in a direction close to the seat body (210) relative to the back contact surface.
